Europäisches Patentamt

European Patent Office

Office européen des brevets

(19)

(11) Numéro de publication : **0 317 438 B1**

(12) **FASCICULE DE BREVET EUROPEEN**

(45) Date de publication du fascicule du brevet :
**11.03.92 Bulletin 92/11**

(51) Int. Cl.⁵ : **B60N 2/26**

(21) Numéro de dépôt : **88402898.6**

(22) Date de dépôt : **18.11.88**

(54) **Siège de sécurité pour jeune enfant dans un véhicule automobile.**

(30) Priorité : **20.11.87 FR 8716129**

(43) Date de publication de la demande :
**24.05.89 Bulletin 89/21**

(45) Mention de la délivrance du brevet :
**11.03.92 Bulletin 92/11**

(84) Etats contractants désignés :
**AT BE CH DE ES FR GB GR IT LI LU NL SE**

(56) Documents cités :
**EP-A- 0 218 444
WO-A-85/00563
US-A- 3 305 265
US-A- 4 641 844**

(73) Titulaire : **BABY RELAX Société en nom
collectif
2, rue Balzac
F-75008 Paris (FR)**

(72) Inventeur : **Julien, Francois
19, rue du Guesclin
F-64200 Biarritz (FR)**

(74) Mandataire : **Brycman, Jean et al
CABINET ORES 6, Avenue de Messine
F-75008 Paris (FR)**

## Description

La présente invention concerne un siège de sécurité pour jeune enfant (pesant moins de 9 kg) dans un véhicule automobile.

Un tel siège comporte une coque cambrée en V dans le sens antéro-postérieur et en U dans le sens transversal et un piétement supportant la coque. Celle-ci est équipée à l'intérieur d'un harnais de sécurité pour maintenir l'enfant en place et à l'extérieur de sangles de sécurité.

Jusqu'à présent, en France, ce type de siège de sécurité doit être attaché sur le siège arrière du véhicule automobile au moyen de ses propres sangles qui coopèrent alors avec les moyens de fixation du véhicule, directement ou par l'intermédiaire d'accessoires. Le siège de sécurité est alors orienté dans le sens de marche du véhicule, son dossier étant placé contre celui du siège arrière dudit véhicule et l'enfant qui s'y trouve assis pouvant regarder vers l'avant.

En cas de choc frontal, le harnais maintient l'enfant dans le siège qui, étant fixé par ses sangles, peut être considéré comme faisant corps avec le siège arrière du véhicule. Dès lors, l'enfant est protégé, mais, suivant l'importance du choc et la manière dont le harnais est mis, il se peut que des traumatismes de l'enfant apparaissent, traumatismes qui sont évidemment moins graves qui si l'enfant n'était pas attaché mais qui cependant peuvent entraîner des soins et des séquelles.

De nouvelles mesures légales vont permettre d'installer le siège de sécurité sur le siège arrière du véhicule dans le sens inverse de la marche et de le fixer avec la ceinture de sécurité du véhicule. Dans ce cas, lors d'un choc frontal, l'enfant est retenu par la coque qui épouse sensiblement la forme de son corps, de sorte que l'énergie du choc transmise à l'enfant se trouve répartie sur une grande surface du corps et risque beaucoup moins de provoquer des dommages.

Cependant, le choc s'accompagne toujours d'un effet de retour non négligeable. La violence du rebond arrière est moindre que celle du choc avant, les energies mises en cause étant proportionnelles, mais suffisante pour projeter l'enfant et son siège vers le dossier du siège arrière du véhicule. Cette projection vers l'arrière est possible, dès lors que la ceinture de sécurité du véhicule s'est détendue pour dissiper l'énergie de choc avant et réduire la décélération de l'enfant. Il s'agit en réalité d'un pivotement de la coque autour de la base arrière du piétement butant contre le dossier du siège du véhicule.

La présente invention a pour but de remédier à cet inconvénient en proposant un perfectionnement grâce auquel une telle projection arrière par pivotement devient impossible.

Ce perfectionnement est donc appliqué à un siège de sécurité comprenant une coque cambrée en V dans le sens antéro-postérieur et équipée d'un harnais de sécurité pour maintenir l'enfant, cette coque étant supportée par un piétement et étant munie d'un arceau de retenue dont les branches latérales faisant corps avec une branche médiane prennent appui sur les côtés de la coque.

Pour atteindre le but précité et conformément à l'invention, les branches latérales de l'arceau de retenue s'étendent, lorsque le siège de sécurité est installé sur l'assise du siège arrière du véhicule dans le sens inverse de la marche et qu'il y est maintenu par la ceinture de sécurité de ce véhicule, en pente ascendante jusqu'à la branche médiane qui est située en avant du piétement de façon à buter contre le dossier du siège arrière sensiblement au niveau de la tête de l'enfant.

Une telle disposition semble illustrée par le brevet US n° 4.641.844 qui concerne un siège présentant les caractéristiques du préambule de la revendication 1. En effet, ce brevet décrit un dispositif à usages multiples comportant une coque montée à inclinaison variable sur un châssis porteur. La coque est destinée à recevoir un bébé pour qu'il soit assis (figure 7) ou couché (figure 8). De plus, un arceau rembourré est prévu pour empêcher le bébé de sortir de la coque et lui permettre de se tenir.

Lorsque le dispositif à coque et arceau est monté sur le siège avant d'un véhicule automobile de façon que le bébé qui s'y trouve logé regarde vers l'arrière, le châssis de ce dispositif peut être fixé sur l'assise du siège du véhicule au moyen d'une sangle. Dans cette position, la branche médiane de l'arceau est éloignée, comme le montrent les figures 7 et 8, du dossier de ce siège de véhicule mais est néanmoins fixée au moyen d'une autre sangle. Cette autre sangle permet de retenir la coque chargée en cas de choc du véhicule par l'avant mais, étant donné que l'arceau n'est pas appliqué fermement contre ledit dossier par ladite sangle, le siège peut basculer lors du rebond arrière qui suit le choc avant.

Un autre document antérieur peut sembler intéressant. Il s'agit du PCT 85/00 563 qui montre une coque pour bébé destinée à être installée entre le tableau de bord et le siège avant d'un véhicule automobile. Cette coque est supportée par un châssis en forme d'équerre dont la branche sensiblement horizontale repose sur l'assise du siège du véhicule et dont la branche sensiblement verticale s'applique contre le dossier dudit siège.

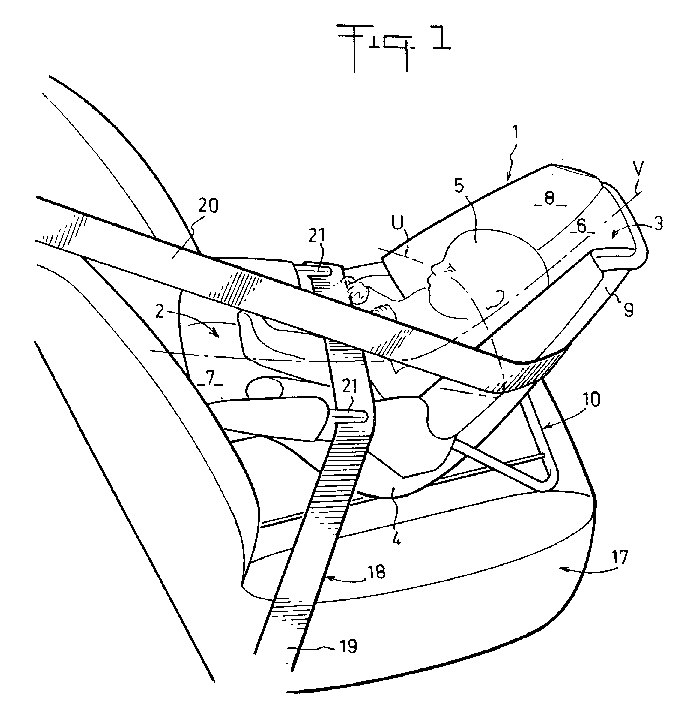

Les figures 1, 5, 6 de ce PCT montrent qu'il est possible de régler le châssis pour que la coque permette d'asseoir ou de coucher le bébé. Etant donné que le châssis peut être verrouillé au moyen d'un dispositif sur le siège du véhicule automobile, on peut supposer que le bébé installé dans le siège ne subira pas les effets du rebond arrière en cas de choc avant. Mais cela n'est pas du tout sûr car on peut imaginer que l'ensemble coque-châssis bascule, étant donné son éloignement du dossier, vers l'arrière surtout si le dispositif de verrouillage n'est pas convenablement monté ou bien s'il ne remplit pas son office.

De toute façon, ce brevet n'enseigne pas de faire buter un arceau de la coque contre le dossier du siège du véhicule automobile et de maintenir le contact grâce à la ceinture de sécurité.

Il ne suggère pas davantage que son châssis pourrait être remplacé par l'arceau du brevet US n° 4.641.844 et que son dispositif de verrouillage pourrait être remplacé par la ceinture de sécurité du siège avant du véhicule pour emprisonner la coque.

Suivant une forme de réalisation particulièrement avantageuse, l'arceau de retenue est monté pivotant relativement à l'ensemble : coque-piétement près du centre de gravité de cet ensemble chargé et est susceptible d'occuper trois positions : la première de butée ascendante vers les pieds, la deuxième de portage verticale et la troisième d'escamotage ascendante vers la tête en recouvrement de la partie dossier de la coque, cet arceau coopérant avec au moins un moyen de verrouillage pour au moins les deux premières positions.

Ainsi, lorsque l'arceau est en position d'escamotage, le siège de sécurité peut être utilisé comme siège "relax" hors du véhicule et, lorsque ledit arceau est en position de portage, le siège de sécurité peut être, qu'il soit vide ou chargé de l'enfant, déplacé à bout de bras comme un panier.

Selon des caractéristiques intéressantes, chaque branche latérale de l'arceau de retenue est articulée autour d'un axe d'une ferrure du piétement située à son sommet et au-dessus de l'angle de la coque, la branche latérale considérée s'élevant en position de butée jusqu'à la branche médiane suivant une pente comprise entre 40 et 50° sur l'horizontale et de préférence sensiblement égale à 45°.

Chaque branche latérale de l'arceau de retenue s'étend sur le côté de la ferrure correspondante et présente en saillie un doit de verrouillage susceptible de coopérer, au moins pour les deux premières positions, avec deux crans respectivement de ladite ferrure, la branche considérée présentant une lumière longitudinale pour le passage de l'axe d'articulation et un organe élastique reliant cet axe au doigt pour tendre à raccourcir leur distance.

Le cran d'au moins l'une des ferrures déterminant la position de butée est fermé à ses deux extrémités situées sur l'axe de l'arceau de retenue dans cette position et ouvert latéralement sur une rampe spirale centripète de la ferrure considérée pour la pénétration du doigt de verrouillage lors du pivotement dudit arceau.

Les côtés de la partie "pieds" de la coque comportent des appendices en forme de crochets ouverts face à la partie "tête" de ladite coque, le brin ventral de la ceinture de sécurité du véhicule passant par-dessus ladite partie "pieds" en étant logé dans les crochets, tandis que le brin diagonal de ladite ceinture passe derrière ladite partie "tête".

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin :

– la figure 1 est une perspective partielle montrant un siège de sécurité installé, comme dans l'invention, sur le siège arrière d'un véhicule automobile ;

– les figures 2 à 4 sont des vues analogues à la figure 1, prises sous des angles différents et illustrant un tel siège de sécurité équipé d'un arceau de retenue conforme à l'invention, respectivement :

    . dans la position d'escamotage

    . dans la position de portage

    . et dans la position de butée.

– la figure 5 est une élévation partielle représentant un moyen de verrouillage sélectif de l'arceau relativement au siège de sécurité.

Ainsi que cela ressort clairement de la figure 1, le siège de sécurité comporte une coque 1 en matière plastique cambrée en V dans le sens antéro-postérieur et en U dans le sens transversal. Elle présente alors une partie "pieds" 2 et une partie "tête" 3 se prolongeant l'une, l'autre en formant un angle 4 dans lequel l'enfant 5 est assis. Son dos s'appuie contre la face 6 de la partie tête, tandis que ses jambes reposent sur la face 7 de la partie pieds, parties dont les côtés 8, 9 sont relevés.

Cette coque est équipée d'un harnais de sécurité, non représenté sur le dessin, permettant d'attacher l'enfant 5 dans le siège de façon qu'il fasse corps avec celui-ci dans les conditions normales d'utilisation et qu'en cas de choc les sangles de la ceinture absorbent l'énergie en se détendant et en protégeant ainsi l'enfant tout en continuant à le retenir.

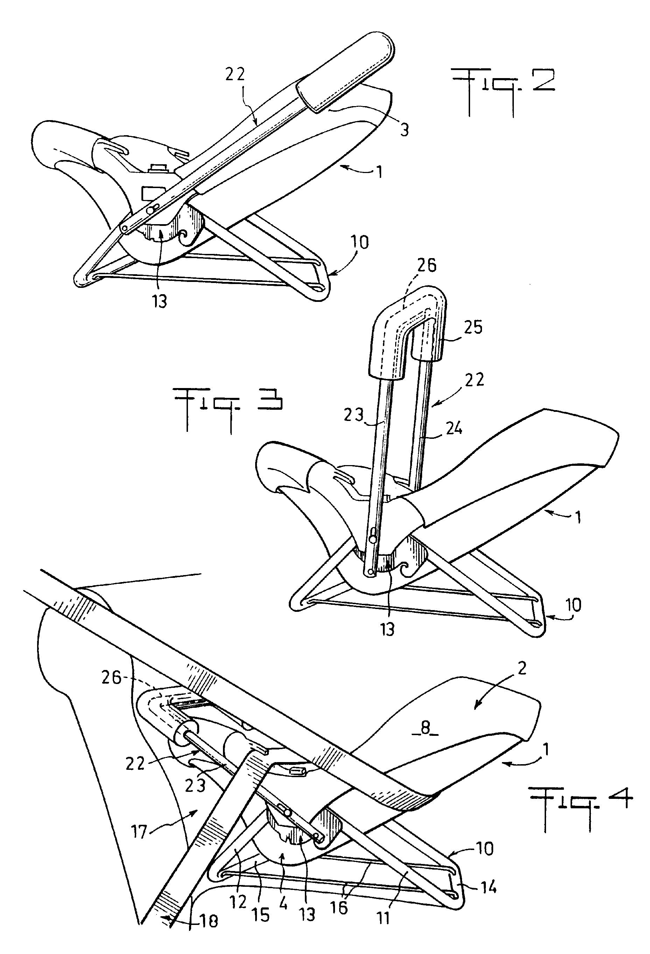

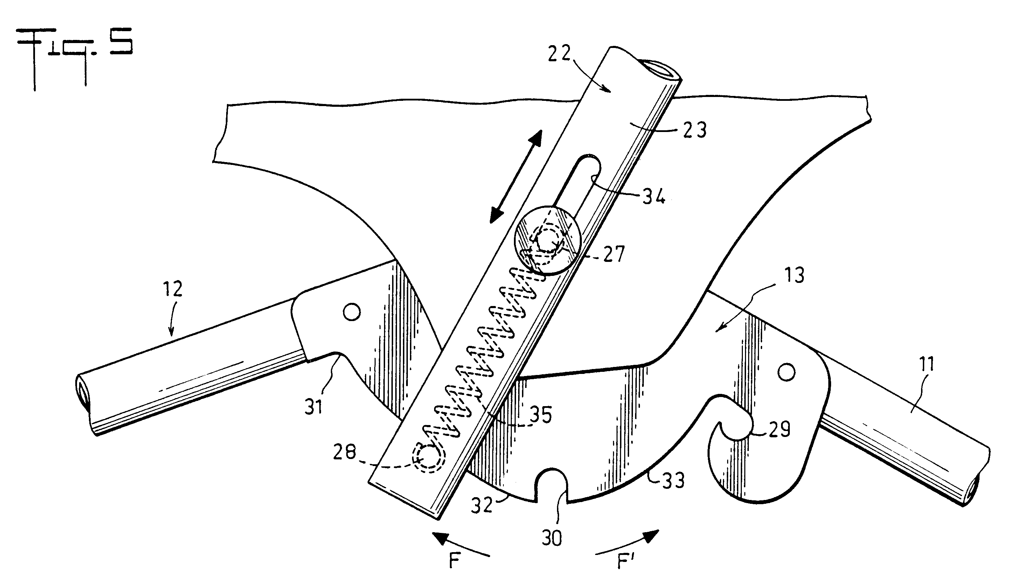

Comme le montre notamment la figure 4, la coque 1 est supportée par un piétement tubulaire 10 constitué par deux éléments en U 11, 12 dont les branches latérales situées de part et d'autre de cette coque sont convergentes, reliées entre elles par deux ferrures latérales 13 et fixées dans les côtés 8, 9 de ladite coque. La branche médiane 14 de l'élément antérieur 11 et la branche médiane 15 de l'élément postérieur 12 sont rigidement entretoisées par des barres 16 ; ces branches 14 et 15 sont destinées à reposer sur le siège arrière 17 d'un véhicule automobile et à constituer les pieds avant et arrière respectivement de la coque, se plaçant sur le devant de l'assise et contre le dossier dudit siège 17 lorsque ladite coque est orientée dans le sens inverse de la marche.

Dans cette position illustrée par la figure 1, la coque 1 est maintenue par la ceinture de sécurité 18 du siège arrière 17 du véhicule. Cette ceinture comporte un brin ventral 19 et un brin diagonal 20 s'étendant respectivement l'un par-dessus la partie "pieds" 2 de ladite coque et l'autre derrière la partie "tête" 3. Pour positionner le brin ventral 17, les côtés 8, 9 de la coque présentent en saillie des appendices 21 en forme de crochets situés dans la partie pieds 2 et ouverts face à la partie tête 3.

Pour s'opposer au rebond arrière du siège de sécurité chargé en cas de choc frontal du véhicule, la coque 1 de ce siège fait corps avec un arceau de retenue 22 (figures 2 à 4) dont les branches latérales 23, 24 prennent appui sur les côtés 8, 9 et, plus précisément, dans l'exemple représenté, sur les ferrures 13 du piétement 10 faisant corps avec lesdits côtés.

Dans la position de butée illustrée par la figure 4, l'arceau 22 s'étend suivant une pente ascendante comprise entre 40 et 50 degrés, de préférence égale à 45°. Il prend appui sur la siège de sécurité au voisinage du centre de gravité de ce siège chargé. La branche médiane 26 de l'arceau 22, entourée par un manchon de rembourrage 25, est située en avant de la branche antérieure 15 du piétement 10 et peut ainsi buter contre le dossier du siège 17 du véhicule lorsque le piétement 10 repose sur l'assise du siège arrière de ce véhicule. La butée de l'arceau contre le dossier se situe à un niveau supérieur relativement audit centre de gravité, de façon qu'en cas de rebond arrière ledit siège de sécurité soit arrête et n'ait pas tendance à pivoter vers le haut.

Suivant une forme de réalisation particulièrement avantageuse illustrée par le dessin et plus spécialement par la figure 5 pour l'un des côtés, chacune des branches 23, 24 de l'arceau 22 est montée pivotante autour d'un axe 27 porté par la ferrure 13 correspondante. Ainsi, l'arceau 22 peut être déplacé par pivotement pour occuper trois positions illustrées par les figures 2 à 4.

Dans la position de butée précitée qui est celle de sécurité illustrée par la figure 4, un doigt de verrouillage 28 porté par l'extrémité libre de chacune des branches 23, 24 de l'arceau est enclenché dans un cran 29 de la ferrure 13 correspondante.

Dans une deuxième position dite de portage illustrée par la figure 3, l'arceau 22 est sensiblement vertical pour être utilisé comme une anse de panier par la personne qui transporte l'enfant 5 dans le siège de sécurité 2, 10. Dans cette position, le doigt 28 de chaque branche de cet arceau est engagé dans un cran 30.

Dans une troisième position dite d'escamotage, illustrée par la figure 2, l'arceau 22 enveloppe la partie "tête" 3 de la coque 1, afin que le siège de sécurité puisse être utilisé hors de l'automobile comme siège "relax". Dans cette position, le doigt 28 de chaque branche de cet arceau bute contre l'extrémité 31 d'une rampe spirale 32 s'étendant à rayon décroissant à partir du cran 30.

Une autre rampe spirale 33 dite centripète relie à rayon décroissant le cran 30 au cran 29.

D'ailleurs, pour obtenir ce verrouillage sélectif, chaque axe d'articulation 27 traverse une lumière longitudinale 34 de la branche correspondante 23 ou 24 de l'arceau 22 et est relié par un ressort 35 un doigt 28 de la même branche. Ainsi, la distance axe-doigt est variable et tend élastiquement à devenir minimale. Dès lors, chaque doigt 28 suit les rampes 32 et 33 lors du pivotement permettant de changer de position et le ressort correspondant 35 exerce une force accompagnant le pivotement, à partir de la position de portage (figure 3 et cran 30), vers la position d'escamotage (figure 2 et extrémité 31) dans le sens de la flèche F en "descendant" la rampe 32 et vers la position de butée (figure 4 et cran 29) dans le sens de la flèche F′ en "descendant" la rampe 33, cette même force provoquant le verrouillage du doigt considéré 28 pour les positions précitées dans le cran 30, contre l'extrémité 31 et dans le cran 29 respectivement.

Pour la position de sécurité (figure 4), il est nécessaire que l'arceau 22 reste verrouillé lors d'un rebond arrière. A cet effet et ainsi que cela ressort de la figure 5, chaque cran 29 est fermé à ses deux extrémités situées sur le rayon suivant lequel s'étend ledit arceau dans cette position ; il s'ouvre latéralement sur la rampe 33 en direction du cran 30 et est fermé en direction opposée.

## Revendications

1. Siège de sécurité pour jeune enfant dans un véhicule automobile, comprenant une coque (1) cambrée en V dans le sens antéro-postérieur et équipée d'un harnais de sécurité pour maintenir l'enfant, cette coque étant supportée par un piétement (10) et étant munie d'un arceau de retenue (22) dont les branches latérales (23, 24) faisant corps avec une branche médiane (26) prennent appui sur les côtés (8, 9) de la coque, caractérisé en ce que les branches latérales (23, 24) de l'arceau de retenue (22) s'étendent, lorsque le siège de sécurité est installé sur l'assise du siège arrière (17) du véhicule dans le sens inverse de la marche et qu'il y est maintenu par la ceinture de sécurité (18) de ce véhicule, en pente ascendante jusqu'à la branche médiane (26) qui est située en avant du piétement de façon à buter contre le dossier du siège arrière (17) sensiblement au niveau de la tête de l'enfant.

2. Siège selon la revendication 1, caractérisé en ce que l'arceau de retenue (22) est monté pivotant relativement à l'ensemble : coque-piétement près du centre de gravité de cet ensemble chargé et est susceptible d'occuper trois positions : la première de butée (figure 4) ascendante vers les pieds, la deuxième de portage (figure 3) verticale et la troisième d'escamotage (figure 2) ascendante vers la tête en recouvrement de la partie dossier de la coque, cet arceau coopérant avec au moins un moyen de verrouillage pour au moins les deux premières positions.

3. Siège selon la revendication 2, caractérisé en ce que chaque branche latérale (23 ; 24) de l'arceau de retenue (22) est articulée autour d'un axe (27) d'une ferrure (13) du piétement (10) située à son sommet et au-dessus de l'angle de la coque, la branche latérale considérée s'élevant en position de butée jusqu'à la branche médiane (26) suivant une pente comprise entre 40 et 50° sur l'horizontale.

4. Siège selon la revendication 3, caractérisé en ce que la pente sur l'horizontale de l'arceau (22) en position de butée est sensiblement égale à 45°.

5. Siège selon la revendication 3 ou 4, caractérisé en ce que chaque branche latérale (23 ; 24) de l'arceau de retenue (22) s'étend sur le côté de la ferrure (13) correspondante et présente en saillie un doigt de verrouillage (28) susceptible de coopérer, au moins pour les deux premières positions avec deux crans (29, 30) respectivement de ladite ferrure, la branche considérée présentant une lumière longitudinale (34) pour le passage de l'axe d'articulation (27) et un organe élastique (35) reliant cet axe au doigt pour tendre à raccourcir leur distance.

6. Siège selon la revendication 5, caractérisé en ce que le cran (29) d'au moins l'une des ferrures (13) déterminant la position de butée est fermé à ses deux extrémités situées sur l'axe de l'arceau de retenue dans cette position et ouvert latéralement sur une rampe spirale centripète (33) de la ferrure considérée pour la pénétration du doigt de verrouillage (28) lors du pivotement dudit arceau.

7. Siège selon l'une quelconque des revendications 1 à 6, caractérisé en ce que les côtés (8, 9) de la partie "pieds" (2) de la coque (1) comportent des appendices (21) en forme de crochets ouverts face à la partie "tête" (3) de ladite coque, le brin ventral (19) de la ceinture de sécurité (18) du véhicule passant par-dessus ladite partie "pieds" en étant logé dans les crochets, tandis que le brin diagonal (20) de ladite ceinture passe derrière ladite partie "tête".

**Patentansprüche**

1. Sicherheitssitz für Kleinkinder in einem Kraftfahrzeug mit einer in der Bewegungsrichtung V-förmig gebogenen Schale (1), mit einem Sicherheitsgeschirr, um das Kind zu halten, wobei die Schale durch ein Gestell (10) abgestützt und mit einem Rückhaltebügel (22) ausgestattet ist, dessen seitliche Arme (23, 24) einteilig mit einem Mittelbügel (26) ausgeführt sind und die sich auf den Seiten (8, 9) der Schale abstützen, dadurch gekennzeichnet, daß die seitlichen Arme (23, 24) des Rückhaltebügels (22) sich in der Gegenrichtung der Fahrbewegung erstrecken, wenn der Sicherheitssitz auf der Sitzbank des hinteren Sitzes (17) des Fahrzeuges angeordnet ist und durch den Sicherheitssitz (18) des Fahrzeuges festgehalten wird, wobei die seitlichen Arme (23, 24) bis zum Mittelbügel (26) ansteigend verlaufen, welcher derart vor dem Gestell angeordnet ist, daß er gegen die Rückenlehne des hinteren Sitzes (17) ungefähr in Höhe des Kopfes des Kindes stößt.

2. Sitz nach Anspruch 1, dadurch gekennzeichnet, daß der Rückhaltebügel (22) bezüglich der Einheit Schale-Gestell nahe am Schwerpunkt dieser beladenen Einheit schwenkbar angeordnet ist und daß er drei Positionen einnehmen kann, eine erste, den Bügel (22) betreffend zu den Füßen hin ansteigende Anschlapposition (Figur 4), eine zweite senkrechte Trageposition (Figur 3) und eine dritte zum Kopf hin ansteigende Einklapposition (Figur 2), bei der das Rückenteil der Schale bedeckt wird, und daß dieser Bügel mit wenigstens einem Verschlußmittel bei wenigstens den zwei ersten Positionen zusammenwirkt.

3. Sitz nach Anspruch 2, dadurch gekennzeichnet, daß jeder seitliche Arm (23, 24) des Rückhaltebügels (22) um eine Achse (27) eines Beschlages (13) des Gestells (10) schwenkbar ist, welcher an dessen Spitze und oberhalb des Winkels der Schale angeordnet ist, wobei der Seitenarm in einer Anschlapposition betrachtet wird, wenn er bis zum Mittelbügel (26) mit einer Steigung zwischen 40 und 50 Grad zur Horizontalen ansteigt.

4. Sitz nach Anspruch 3, dadurch gekennzeichnet, daß der Anstiegswinkel bezüglich der Horizontalen des Bügels (22) in der Anschlagposition im wesentlichen gleich 45 Grad ist.

5. Sitz nach Anspruch 3 oder 4, dadurch gekennzeichnet, daß jeder seitliche Arm (23, 24) des Rückhaltebügels (22) sich auf der Seite des entsprechenden Beschlages (13) erstreckt und in einem Ansatz einen Verschlußfinger (28) aufweist, der wenigstens für die beiden ersten Positionen mit zwei jeweiligen Rast-Irerben (29, 30) des besagten Beschlages zusammenwirkt, wobei der betrachtete Arm ein Langloch (34) zur Durchführung der verschwenkbaren Achse (27) und ein elastisches Element (35) aufweist, das diese Achse mit dem Verschlußfinger verbindet, um ihren Abstand voneinander zu verkürzen.

6. Sitz nach Anspruch 5, dadurch gekennzeichnet, daß die Rastkerbe (29) von wenigstens einem der Beschläge (13), die die Anschlaglage bestimmen, an ihren beiden, auf der Achse des Rückhaltebügels in dieser Position befindlichen Enden geschlossen und seitlich auf einer zentripetalen Spiralbahn (33) des betrachteten Beschlages offen ist, damit der Verschlußfinger (28) während des Verschwenkens des besagten Haltebügels eindringen kann.

7. Sitz nach einem der vorstehenden Ansprüche 1 bis 6, dadurch gekennzeichnet, daß die Seiten (8, 9) der Fußteile (2) der Schale (1) Ansätze (21) aufweisen, die die Form von in Richtung des Kopfteils (3) der Schale offenen Haken haben, wobei der Bauchgurt (19) des Sicherheitsgurtes (18) des Fahrzeuges über das besagte Fußteil führt und in den Haken befestigt ist, während der Diagonalgurt (20) des Sicherheitsgurtes hinter dem besagten Kopfteil herumgeführt ist.

## Claims

1. A safety seat for a young child in a motor vehicle, comprising a body (1) bent into a V in the anteroposterior direction and equipped with a safety harness to hold the child, this body being supported by an underframe (10) and being equipped with a restraining arch (22) the lateral arms (23, 24) of which are integral with a medial arm (26) and rest on the sides (8, 9) of the body, characterised in that the lateral arms (23, 24) of the restraining arch (22) extend, when the safety seat is installed on the back seat (17) of the vehicle in the opposite direction to that of travel and is held there by the seat belt (18) of this vehicle, sloping upwards as far as the medial arm (26) which is situated in front of the underframe in such a manner as to abut against the back of the rear seat (17) substantially at the level of the child's head.

2. A seat according to Claim 1, characterised in that the restraining arch (22) is mounted for pivoting relatively to the body-underframe assembly close to the centre of gravity of this loaded assembly and is adapted to occupy three positions: the first in abutment (Figure 4) rising towards the feet, the second for carrying (Figure 3), vertical, and the third retracted (Figure 2) rising towards the head and covering the back portion of the body, this arch cooperating with at least one locking means for at least the first two positions.

3. A seat according to Claim 2, characterised in that each lateral arm (23; 24) of the restraining arch (22) is articulated about a pin (27) of an iron fitting (13) of the underframe (10), which fitting is situated at its highest point and above the angle of the body, the lateral arm considered, rising in the abutment position as far as the medial arm (26) in a slope at between 40 and 50° to the horizontal.

4. A seat according to Claim 3, characterised in that in the abutment position, the slope of the arch (22) to the horizontal is substantially equal to 45°.

5. A seat according to Claim 3 or 4, characterised in that each lateral arm (23; 24) of the restraining arch (22) extends over the side of the corresponding iron fitting (13) and has a projecting locking finger (28) adapted to cooperate, at least for the first two positions, with two notches (29, 30) respectively of said iron fitting, the arm considered having a longitudinal slot (34) for the passage of the hinge pin (27) and a resilient member (35) connecting this pin to the finger to tend to shorten their distance.

6. A seat according to Claim 5, characterised in that the notch (29) of at least one of the iron fittings (13) determining the abutment position is closed at its two ends situated on the axis of the restraining arch in this position and open laterally on a centripetal spiral ramp (33) of the iron fitting considered for the penetration of the locking finger (28) on pivoting of said arch.

7. A seat according to any one of Claims 1 to 6, characterised in that the sides (8, 9) of the "foot" portion (2) of the body (1) comprise appendages (21) in the form of hooks open towards the "head" portion (3) of said body, the lap strand (19) of the seat belt (18) of the vehicle passing over said "foot" portion and being accommodated in the hooks, while the diagonal strand (20) of said belt passes behing said "head" portion.

Fig. 1

Fig. 2

Fig. 3

Fig. 4

Fig. 5